# EUROPÄISCHE PATENTANMELDUNG

(11) **EP 2 420 392 A1**
(43) Veröffentlichungstag der Anmeldung: **22.02.2012**
(21) Anmeldenummer: 11170315.3
(22) Anmeldetag: 17.06.2011
(51) Int. Cl.: B60B 21/12

(54) **Felge und Verfahren zur Herstellung der Felge**

(30) Priorität: 18.08.2010 DE 102010037033
(71) Anmelder: Schürmann Fahrradteile GmbH & Co. KG, 33818 Leopoldshöhe-Greste (DE)
(72) Erfinder: Krauspe, Mark, 33719 Bielefeld (DE)
(74) Vertreter: Dantz, Jan Henning

(57) **Zusammenfassung**

Eine Fahrradfelge, die zwei Seitenabschnitte (2, 3) und einen Innenring (5) aufweist, soll dekorativer gestaltet werden und im Bedarfsfalle auch beschrift- oder bedruckbar sein.

Erfindungsgemäß ist auf die äußere Fläche des Innenringes (5) eine Folie (9) aufgebracht, die bedruckbar oder beschriftbar ist und bevorzugt eine Dekorfolie ist, so dass die sichtbare Fläche einer Fahrradfelge (1) farblich gestaltet werden kann.

Die erfindungsgemäße Fahrradfelge ist eine Hohlkammerfelge, die aus einer Aluminiumlegierung durch Formung einer Profilstange hergestellt ist.

## Beschreibung

Die vorliegende Erfindung betrifft eine Felge, insbesondere eine Fahrradfelge, mit einem Felgenbett, welches von zwei ringförmigen, außenseitig Bremsflächen aufweisende Seitenabschnitte und wenigstens einem die Seitenabschnitte verbindenden Innenring begrenzt ist, der mit Löchern versehen ist.

Die Erfindung bezieht sich ferner auf ein Verfahren zur Herstellung der Felge.

Die Felge ist ein ringförmiger Bestandteil eines Laufrades. Sie nimmt den Reifen, den Schlauch und das Felgenband auf und wird über die Speichen und über die Nabe mit dem Rest eines Zweirades verbunden. Es sind jedoch auch Felgen für schlauchlose Reifen bekannt.

Die Felgentype richtet sich nach der Art des Fahrrades, beispielsweise ob es sich um ein Trekkingrad, ein Mountainbike oder um ein Rennrad handelt.

Besonders verbreitet sind sogenannte Hohlkammerfelgen, bei denen den Innenringen zur Bildung der Hohlkammer noch ein weiterer Ring zugeordnet ist. Im Verbindungsbereich dieses Ringes mit den Seitenabschnitten sind Bohrungen vorgesehen, in die zur Verbindung der Enden der Felgen nach der Verformung Stifte eingesetzt werden, da üblicherweise die Verbindung durch ein Verpressen erfolgt.

Die äußeren Bremsflächen der Seitenabschnitte stehen parallel zueinander. Durch diese Bremsflächen wird die Breite einer Felge bestimmt.

Die Felgen werden bevorzugt aus einer Aluminiumlegierung gefertigt, da das Gewicht einer Felge dann entsprechend gering ist und diese Legierung eine bessere Bremswirkung bietet. Die Felgen können jedoch auch aus einer Stahllegierung gefertigt sein. Besonders für Rennräder oder Mountainbikes werden die Felgen auch aus Faserverbundstoffen gefertigt.

Während bei Stahlfelgen zumindest die Sichtseite einer Oberflächenbehandlung unterzogen wurde, beispielsweise durch Verchromen, werden Felgen, die aus einer Aluminiumlegierung hergestellt werden, nicht behandelt. Dadurch wirkt der ästhetische Eindruck nicht besonders hochwertig.

Darüber hinaus ist die Oberfläche ungeschützt, wodurch das Aussehen auch bei Felgen aus Aluminiumlegierungen sich im Laufe der Zeit verschlechtert. Außerdem ist eine Beschriftung oder das Anbringen von Dekoren oder Mustern nicht möglich.

Der Erfindung liegt die Aufgabe zugrunde, eine Felge, insbesondere eine Fahrradfelge aus einer Aluminiumlegierung der eingangs näher beschriebenen Art so zu gestalten, dass in einfacher Weise das Erscheinungsbild verbessert wird, und dass ein Oberflächenschutz gegeben ist, und dass im Bedarfsfalle die äu-βere Fläche des Innenringes beschriftet werden kann oder mit Dekoren versehen werden kann. Der Erfindung liegt ferner die Aufgabe zugrunde, ein Verfahren zum Herstellen der erfindungsgemäßen Felge aufzuzeigen, ohne dass die zur Herstellung benötigten Werkzeuge und Verfahrensschritte geändert werden müssen.

Die auf die Felge gerichtete Aufgabe wird dadurch gelöst, dass die Außenfläche des Innenringes mit einer Folie beschichtet ist, die sich zumindest über einen Teil der Breite der Felge erstreckt.

Folien sind in vielen Ausführungen bekannt. Es ist nunmehr möglich, die Sichtfläche des Innenringes vielfältig zu gestalten. Darüber hinaus wird auch ein Oberflächenschutz erzielt, da bekanntlich Folien gegen Witterungseinflüsse äußerst beständig sind. Darüber hinaus kann die Folie individuell beschriftet oder bedruckt werden. Es ist jedoch auch möglich, dass die Folie vor dem Aufbringen auf das Felgenmaterial geprägt wird, um beispielsweise die Felge zu identifizieren.

Besonders vorteilhaft ist, wenn die Folie sich über die gesamte Breite der Felge erstreckt, d.h., von der einen Bremsfläche bis zur anderen. Dadurch wird ein optimaler Oberflächenschutz erreicht und die Folie kann vor dem Aufbringen auf das Felgenmaterial mit Motiven bedruckt werden und sie kann aber auch nachträglich beschriftet werden. Ein weiterer Vorteil ist noch darin zu sehen, dass die Felgen mit verschiedenartigen Folien beschichtet werden können, so dass der Käufer eines Fahrrades die Wahl zwischen unterschiedlichen Folienbeschichtungen hat.

In weiterer Ausgestaltung ist noch vorgesehen, dass die Folie eine Dekorfolie ist, wobei das Dekor die Sichtseite bildet. Eine solche Folie wird von einem Folienhersteller geliefert, so dass der Hersteller der Felgen keine zusätzlichen Werkzeuge oder dergleichen für die Herstellung benötigt.

Zur Herstellung der Felgen werden nacheinander folgende Verfahrensschritte durchgfeführt:
a) aus einer Profilstange mit einer handelsüblichen Länge von z. B. 6 Meter werden durch Verformung entsprechend dem Durchmesser der herzustellenden Felgen mehrere Ringe gebildet, die
b) getrennt und die Enden miteinander durch Verpressen verbunden werden, wobei
c) anschließend in den Innenring die Löcher eingestanzt werden und anschließend werden
d) die Seitenabschnitte zur Bildung der Bremsflächen spangebend bearbeitet.

Zur Lösung der auf das Verfahren gerichteten Aufgabe ist vorgesehen, dass die Folie vor der Formung der Ringe auf die Profilstange aufgebracht wird.

Das Aufbringen der Folie ist dadurch besonders einfach, da sich die Profilstangen noch in einem unverformten Zustand befinden, so dass ein durchgehender Folienstreifen maschinell aufgebracht werden kann. Außerdem können die zur Formung der Felgen notwendigen Werkzeuge und Vorrichtungen unverändert bleiben.

Besonders vorteilhaft ist, wenn die Folie einseitig mit einer Selbstklebebeschichtung versehen ist, die durch eine Silikonlage abgedeckt ist. Diese Silikonlage wird dann vor dem Kontakt der Folie mit der Profilstange abgezogen.

Alternativ ist es jedoch auch möglich, dass die Folie einseitig mit einer Beschichtung aus einem lösungsmittelfreien Kleber versehen ist. Die Aktivierung dieses Klebers erfolgt dann durch Wärmeeinwirkung.

In weiterer Ausgestaltung ist noch vorgesehen, dass die Felge aus einer Hohlprofilschiene geformt ist, die aus einer Aluminiumlegierung im Strangpressverfahren hergestellt ist.

Anhand der beiliegenden Zeichnung wird die Erfindung noch näher erläutert.

Es zeigt:

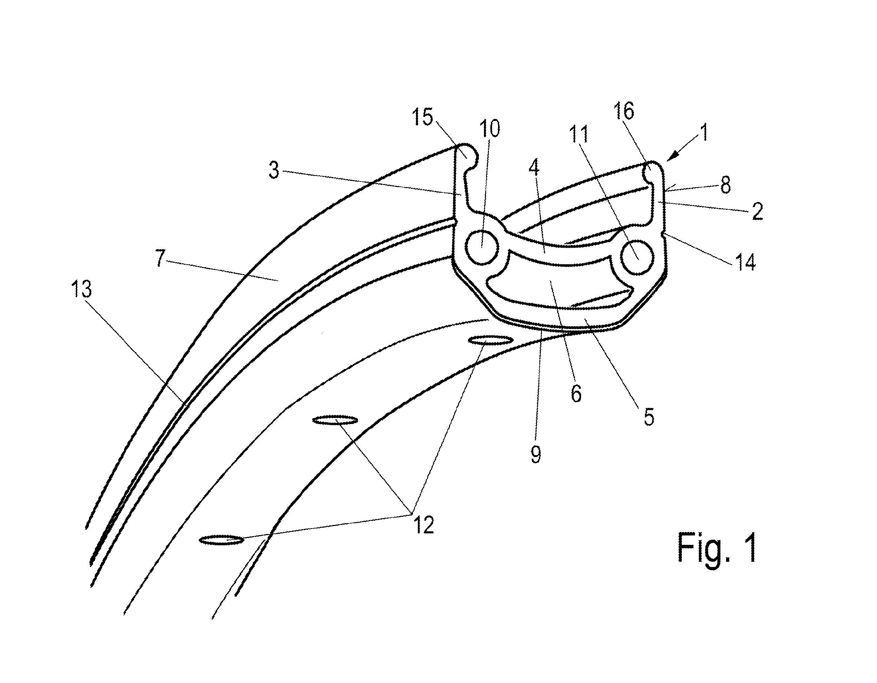

- Figur 1: eine erfindungsgemäße Felge in einer Teilansicht in perspektivischer Darstellung.

Aus Gründen der vereinfachten Darstellung ist in der Figur 1 die Felge nur teilweise dargestellt. Die Erfindung wird anhand einer Hohlkammerfelge 1 erläutert. Das Felgenbett wird von zwei parallel und im Abstand zueinander verlaufenden Seitenabschnitten 2, 3 und einem Zwischenring 4 begrenzt. Im dargestellten Ausführungsbeispiel ist die Felge außerdem noch mit einem Innenring 5 versehen, der die beiden Seitenabschnitte 2, 3 verbindet. In Verbindung mit dem Zwischenring 4 und Teilen der Seitenabschnitte 2, 3 wir dadurch eine Hohlkammer 6 gebildet.

Die äußeren parallel und im Abstand zueinander stehenden Flächen der Seitenabschnitte 2, 3 bilden Bremsflächen 7, 8. Wie die Figur zeigt, ist der Innenring 5 an der Außenseite bzw. der Sichtseite mit einer Folie 9 beschichtet, die sich über die gesamte, durch den Abstand der Bremsflächen 7, 8 bestimmten Breite der Felge 1 erstreckt. Diese Folie 9 ist bevorzugt eine farbige Dekorfolie. Sie ist beschriftbar oder bedruckbar, so dass darauf sichtbar Informationen in Form von Symbolen, Ziffern oder Zahlen auch in der Kombination aufgebracht werden können. Außerdem ist es möglich, dass mittels eines Prägewerkzeuges vor dem Aufbringen der Folie ein Prägevorgang erfolgt.

Die Felgen werden aus Profilstangen durch Verformung hergestellt. Diese Profilstangen werden bevorzugt aus einer Aluminiumlegierung im Strangpressverfahren hergestellt. Die übliche Länge einer solchen Profilstange ist 6 Meter, so dass aus einer Stange mehrere Felgen 1 hergestellt werden können. Die Folienstreifen 9 werden vor dem Formgebungsprozess der Felge 1 auf die Profilstangen aufgebracht. Dies erfolgt bevorzugt durch eine Klebeschicht. Dazu kann diese Schicht aus einem lösungsmittelfreien Kleber bestehen, wobei dann die Verbindung durch Erwärmung der Klebeschicht erfolgt. Alternativ ist es auch möglich, dass die Klebeschicht aus einem selbstklebenden Klebemittel besteht. In diesem Falle würde diese Klebeschicht durch einen abziehbaren Silikonstreifen abgedeckt, der unmittelbar vor dem Aufbringen auf die Profilstangen abgezogen wird.

Wie die Figur 1 ferner zeigt, ist die Felge 1 mit zwei umlaufenden Bohrungen 10, 11 versehen, die im Abstand zueinander verlaufen und in den Übergangsbereichen zwischen den Seitenabschnitten 7, 8, dem Zwischenring 4 und dem Innenring 5 angeordnet sind. In diese Bohrungen werden nach der Bildung der Ringe und Trennen der einzelnen aus einer Profilstange hergestellten Felge Stifte eingesetzt, so dass die Verbindung der Stoßflächen der Felge durch Verpressen erfolgen kann.

Wie die Figur 1 ferner zeigt, sind in den Innenring 5 in Winkelabständen zueinander stehende Löcher 12 eingestanzt, in die mit Innengewinde versehene Nippel einsetzbar sind, um die Speichen eines Rades einzudrehen. Ferner zeigt die Figur 1 noch, dass die Bremsflächen an der dem Innenring 5 zugewandten Seite durch Nuten 13, 14 begrenzt sind. Schließlich zeigt auch die Figur noch, dass die dem Innenring 5 abgewandt liegenden Endbereiche der Seitenabschnitte 2, 3 wulstartig gestaltet sind, wobei diese Wülste 15, 16 aufeinander zu gerichtet sind, so dass dadurch der nicht dargestellte Reifen eines Rades fixiert ist.

Die Erfindung ist nicht auf das dargestellte Ausführungsbeispiel beschränkt. Wesentlich ist, dass bei einer Felge 1, vorzugsweise einer Fahrradfelge die Außenseite des Innenringes mit einer Folie 9 beschichtet ist, die als Dekorfolie gestaltet sein kann und die darüber hinaus beschriftbar oder bedruckbar ist. Ferner ist für das Herstellverfahren wesentlich, dass diese Folie 9 bzw. der Folienstreifen vor der Formung der Felge 1 aus einer Profilstange auf diese aufgebracht wird.

## Patentansprüche

1. Felge (1), insbesondere Fahrradfelge, mit einem Felgenbett, welches von zwei ringförmigen, außenseitig Bremsflächen (7, 8) aufweisenden Seitenabschnitten (2, 3) und wenigstens einem die Seitenabschnitte (2, 3) verbindenden Innenring (5) begrenzt ist, der mit Löchern (12) versehen ist, **dadurch gekennzeichnet, dass** die Außenfläche des Innenringes (5) mit einer Folie (9) beschicht ist, die sich zumindest über einen Teil der Breite der Felge (1) erstreckt.

2. Felge nach Anspruch 1, **dadurch gekennzeichnet, dass** die Folie (9) sich über die gesamte Breite der Felge (1) erstreckt.

3. Felge nach Anspruch 1 oder 2, **dadurch gekennzeichnet, dass** die Folie (9) eine Dekorfolie ist, wobei das Dekor die Sichtseite bildet.

4. Felge nach einem oder mehreren der vorstehenden Ansprüche, **dadurch gekennzeichnet, dass** die Folie (9) bedruckbar und/oder beschriftbar ist.

5. Felge nach einem oder mehreren der vorstehenden Ansprüche, **dadurch gekennzeichnet, dass** die Folie (9) mittels einer Klebeschicht mit der Au-βenfläche des Innenringes (5) verbunden ist.

6. Verfahren zum Herstellen einer Felge, insbesondere nach Anspruch 1, bei dem aus einer Profilstange durch Verformung mehrere Ringe gebildet werden, dass danach die Ringe getrennt und die Enden miteinander verbunden werden, und dass anschließend in den Innenring (5) die Löcher (12) eingestanzt werden und dass daraufhin die Seitenabschnitte (2, 3) zur Bildung der Bremsflächen (7, 8) spangebend bearbeitet werden, **dadurch gekennzeichnet, dass** die Folie (9) vor der Formung der Ringe auf die Profilstange aufgebracht wird.

7. Verfahren nach Anspruch 6, **dadurch gekennzeichnet, dass** die Folie (9) mittels einer Klebebeschichtung, vorzugsweise aus einem selbstklebenden Klebemittel oder einem lösungsmittelfreien Klebemittel auf die Außenseite des Innenringes (5) festgelegt wird.

8. Verfahren nach Anspruch 6, **dadurch gekennzeichnet, dass** die Felge (1) aus einer Hohlprofilschiene geformt ist, die aus einer Aluminiumlegierung im Strangpressverfahren hergestellt ist.
